# EUROPÄISCHE PATENTSCHRIFT

(11) **EP 0 738 819 B1**
(45) Veröffentlichungstag und Bekanntmachung des Hinweises auf die Patenterteilung: **16.02.2000**
(21) Anmeldenummer: 96103891.6
(22) Anmeldetag: 12.03.1996
(51) Int. Cl.: B21D 53/74, E06B 3/96

(54) **Verfahren und Stanzmesser zur Herstellung einer Verbindung von Profilwerkstücken und Verbindungsstück**
Method and punching tool for the fabrication of a joining of profiled work pieces and joining piece
Procédé et poinçon de perforation pour la fabrication d'une jonction de pièces d'oeuvre en profilés et pièce de jonction

(30) Priorität: 19.04.1995 DE 19514402
(43) Veröffentlichungstag der Anmeldung: 23.10.1996
(73) Patentinhaber: RAPID MASCHINENBAU GmbH, 72131 Ofterdingen (DE)
(72) Erfinder: Wydra, Wilhelm, 56253 Treis-Karden (DE)
(74) Vertreter: Wunderlich, Rainer, Dipl.-Ing.

(56) Entgegenhaltungen:
- DE-A- 2 001 608
- DE-A- 2 243 558
- DE-A- 2 522 523
- DE-A- 4 100 946
- DE-U- 8 621 143

## Beschreibung

Die Erfindung betrifft ein Verfahren gemäß dem Oberbegriff des Anspruchs 1 und ein Stanzmesser zur Herstellung einer Verbindung zwischen einem Werkstück mit mindestens einer Profilkammer und einem Verbindungsstück gemäß dem Oberbegriff des Anspruchs 4.

Solche Verfahren und Stanzmesser sind beispielsweise aus der DE-U-86 21 143 bekannt. Auf solchen Maschinen werden die auf Gehrung abgelängten Profile mittels Eckwinkeln, die in die Profilkammern geschoben werden, miteinander verbunden und eingespannt. Zunächst wird in dieser Einspannung mittels einer Bohreinheit ein Loch gebohrt. Anschließend wird in derselben Einspannung mit einem Dorn unter hohem Druck die Profilwand in die Eckwinkel verpreßt. Zusätzlich werden die beiden Teile in einem nachfolgenden Schritt verklebt.

Aus der DE-A-22 43 558 ist ein Verfahren bekannt, bei welchem Hohlprofilstäbe aus Metall über ein mit Ausnehmungen versehenes Eckverbindungselement verbunden werden. Die Verbindung der Teile erfolgt dadurch, daß die Wände der Hohlprofile im Bereich der Eckverbindung mittels einem Stößel in die Ausnehmungen des Verbindungsstücks hineingetrieben werden. Das beschriebene Verfahrens weist jedoch den Nachteil auf, daß die Eckverbindung nicht immer genau ausfallen wird, da die Ausnehmungen im Eckverbindungselement herstellungsbedingt Lageabweichungen in bezug auf den Eckwinkel aufweisen und die Verpressung der Hohlprofile nicht immer an der Stelle entsprechend der Lage der Ausnehmung erfolgt.

In der DE-A- 25 22 523 wird ein Verfahren und eine Vorrichtung zum Verbinden der Ecken von auf Gehrung geschnittenen Leichtmetallhohlprofilen offenbart. Auch hierbei besteht der Grundgedanke darin, daß das Eckelement, über welches die Hohlprofile verbunden werden, mit Vertiefungen versehen ist, in welche die Wand der Hohlprofile mit Spezialwerkzeugen gedrückt werden. Bei diesem Verfahren werden beidseitig vom Eckwinkel im Bereich der im Eckelement vorgesehenen Vertiefungen Werkzeuge aufeinander zu bewegt, so daß sie einen relativ großen Druck auf die Hohlprofile ausüben und einerseits das Material der Hohlprofile entsprechend der Ausnehmung verformt wird und andererseits das Material der Wandung im Bereich der Gehrungsschnittfläche zusammengestaucht wird. Durch die hohen Verformungskräfte, die auf die Hohlprofile wirken, kann es zu unerwünschten Verformungen kommen und gegebenenfalls zu einer Beschädigung der Oberflächenschicht.

Aus der DE-PS 20 01 608 ist eine Eckverbindung für einen Metallprofilrahmen sowie ein Verfahren zur Herstellung einer Eckverbindung bekannt, bei welchem im Eckwinkel-Element Vertiefungen bei der Herstellung im Zieh-Preß-Verfahren eingezogen werden und in die Metallprofilrahmen werden mit Stanz-Preß-Werkzeugen in Längsrichtung verlaufende Lappen in beide außenliegende Stege eingestanzt und in die korrespondierende Vertiefung des Eckelements nach innen gebogen. Dabei wird die Schnittstirnkante der Lappen gegen eine schräge Begrenzungsfläche der Vertiefung gepreßt und der jeweilige Schenkel des Eckelements wird dadurch derart in das Hohlprofil gedrückt, daß an den Gehrungsflächen eine dichte Fuge entstehen soll. Auch bei diesem Verfahren wird die Verbindung der Metallprofilrahmen mit dem Eckelement durch Stanzen und Verpressen erzeugt. Durch eine eventuell auftretende Metallrückfederung beim Zurückziehen des Verformungswerkzeugs, kann es vorkommen, daß in einem der Verbindungspunkte keine schlüssige Verbindung entsteht und durch den einseitigen Druck auf die Gehrungsflächen sich diese zueinander verschieben könnten.

Der Erfindung liegt die **Aufgabe** zugrunde, ein Verfahren gemäß dem Oberbegriff des Anspruchs 1 und ein Stanzmesser gemäß dem Oberbegriff des Anspruchs 4 zu schaffen, welche eine besonders schnelle und sichere Herstellung einer Verbindung zwischen dem Werkstück und dem Verbindungsstück ermöglichen.

Die Lösung dieser Aufgabe erfolgt verfahrensmäßig gemäß den Merkmalen des Anspruchs 1 und vorrichtungsmäßig gemäß den Merkmalen des Anspruchs 4. Vorteilhafte Weiterbildungen sind in den Unteransprüchen beschrieben.

Nach dem Grundgedanken der Erfindung wird gleichzeitig mit der Verpressung des Werkstücks mit dem Verbindungsstück auch eine Lochung des Werkstücks vorgenommen, wobei durch die Löcher der Klebstoff eingespritzt werden kann. Dazu weist das Stanzmesser neben dem zum Verpressen ausgebildeten Bereich eine Einrichtung zum Lochen des Werkstücks auf. So kann in einem einzigen Arbeitsgang Verpressen und Lochen in einer genau zueinander definierten Geometrie erfolgen. Durch die erfindungsgemäße Ausbildung des Stanzmessers ist die Anordnung von Loch und Verpressungsbereich zueinander exakt und zuverlässig herstellbar.

Ein wesentlicher Vorteil der Erfindung gegenüber dem Stand der Technik ist, daß nur noch ein Arbeitsgang erfolgt. Das bedeutet, daß ein vorhergehender Arbeitsgang zum Lochen des Werkstücks, bevor es mit dem Verbindungsstück verbunden wird, entfallen kann. Dadurch entsteht ein wesentlicher Zeitvorteil.

In einer Weiterentwicklung der Erfindung wird gleichzeitig mit dem Lochen Kleber in den Verbindungsbereich eingespritzt. Dies kann beispielsweise dadurch erfolgen, daß der Lochstempel hohl ausgebildet ist und zur Kleberzuführung genutzt wird.

Bevorzugt wird das erfindungsgemäße Verfahren beim Bau von Eckverbindungsmaschinen zur Verbindung von Aluminiumprofilen und Eckwinkeln eingesetzt.

Das erfindungsgemäße Stanzmesser weist in einer bevorzugten Ausführungsform einen Lochstempel mit einer direkt daneben ausgebildeten scharfkantigen Spitze zum Verpressen des Werkstücks mit dem Verbindungsstück auf. Diese sind so nebeneinander angeordnet und zueinander ausgerichtet, daß sie beide in den Bereich des Werkstücks eingreifen, der von der dahinterliegenden Ausnehmung des Verbindungsstücks hinterlegt ist. Dadurch kann die erzeugte Verpressungsfahne in die Ausnehmung gedrückt werden und der Lochstempel durch das äußere Verbindungsstück hindurchdringen.

In einer bevorzugten Weiterbildung der Erfindung ist die Spitze des Lochstempels abgeschrägt. Da Lochstempel und Werkstück unter einem spitzen Winkel miteinander in Eingriff gebracht werden, kann durch den schräg abgeflachten Bereich an der Spitze des Lochstempels ein flächiger Kontakt zwischen Lochstempel und Werkstück erzielt werden.

Die Erfindung ist besonders zur Anwendung bei Metallprofilen, insbesondere bei Aluminiumprofilen, Aluminium-Isolierprofilen und Aluminium-Kunststoffprofilen geeignet.

Nachfolgend wird die Erfindung beispielhaft für Eckverbindungen an Alumimium-Fenstern und Türprofilen beschrieben und anhand einer Zeichnung weiter erläutert. Im einzelnen zeigen die schematischen Darstellungen in
- Fig. 1: eine perspektivische Ansicht von zusammenzufügenden Aluminiumprofilen und Eckwinkeln;
- Fig. 2a: eine Aufsicht auf ein erfindungsgemäßes Stanzmesser;
- Fig. 2b: eine Seitenansicht des gegenüber Fig. 2a um 90 Grad gedrehten Stanzmessers;
- Fig. 3a: Aluminiumprofile und Stanzmesser in einer Ausgangsposition; und
- Fig. 3b: Aluminiumprofile und Stanzmesser in einer Position nach Verfahrensende.

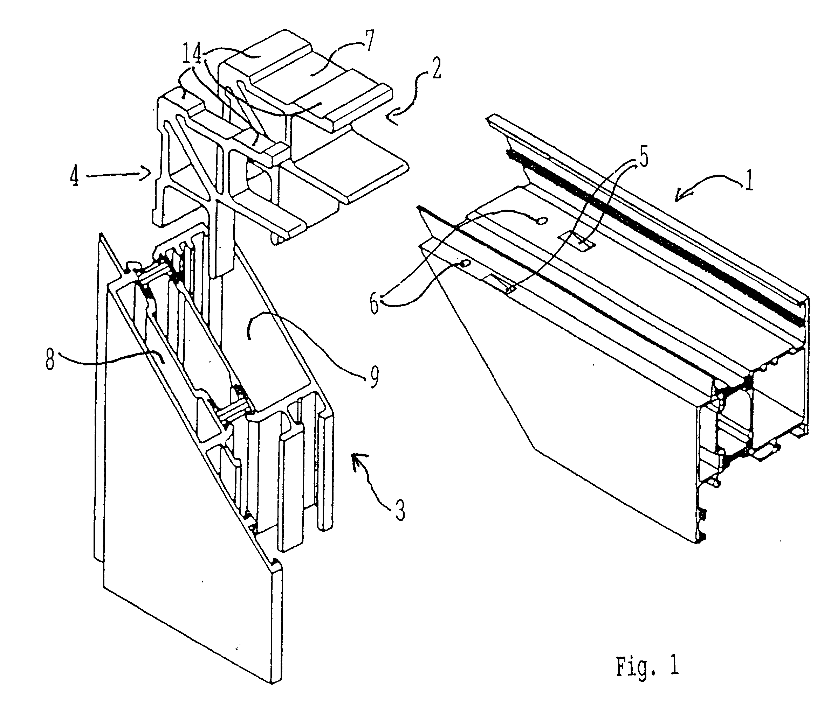

Figur 1 zeigt zwei auf Gehrung abgelängte Aluminiumprofile 1 und 3 und Eckwinkel 2 und 4. Die Profilkammern 8 und 9 dienen zur Aufnahme der Eckwinkel 2 und 4. Die in Figur 1 dargestellten Verpreßfahnen 5 und Löcher 6 werden verfahrensmäßig erst nach dem Zusammenschieben der Aluminiumprofile 1 und 3 auf die Eckwinkel 2 und 4 erzeugt und sind hier zur Verdeutlichung auch schon im nicht zusammengeschobenen Zustand dargestellt. Die Verpreßfahne 5 greift in die Profilnut 7 der Eckwinkel 2 und 4 ein. Ebenso liegen die Löcher, durch die dann Klebstoff eingespritzt wird, im Bereich der Profilnut 7. Der eingespritzte Klebstoff verteilt sich dann auf die Flächen 14 und führt zu einer endgültigen Verbindung und Verklebung der Aluminiumprofile 1 und 3 mit den Eckwinkeln 2 und 4. Die Eckwinkel sind formschlüssig mit den Aluminiumprofilen ausgebildet und können zusätzlich Rastprofile aufweisen.

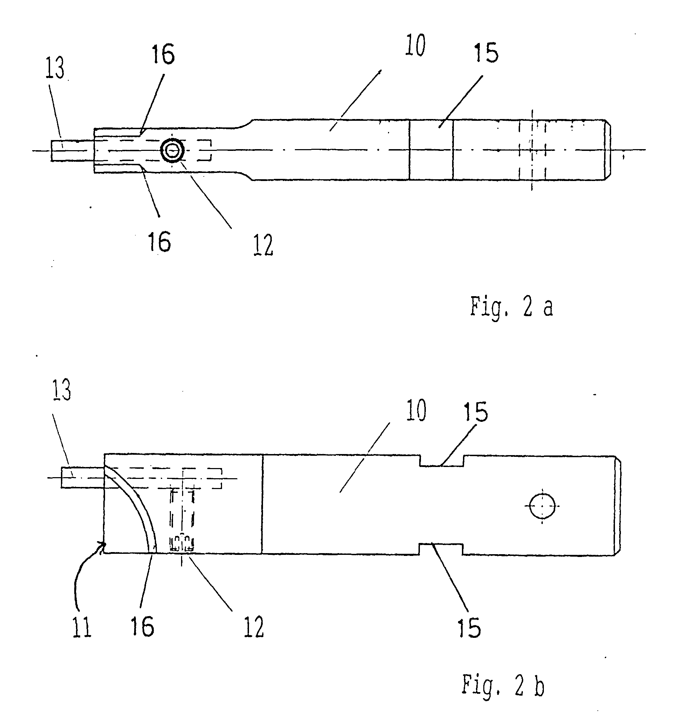

In Figur 2a und 2b sind verschiedene Seitenansichten des Stanzmessers 10 dargestellt. Das Stanzmesser 10 weist Ausnehmungen 15 zur Halterung in der Eckverbindungsmaschine auf. Die scharfkantige Spitze 11 weist eine Schnittkante auf und dient zum Herausdrücken einer Verpreßfahne 5. Die scharfkantige Spitze 11 ist nur über einen Teil der Breite des Stanzmessers 10 ausgebildet und wird durch die Rundung 16 begrenzt. Im verbreiterten Bereich der Stanzmesser-Stirnseite ist ein Lochstempel 13 vorgesehen, der eine Lochung 6 in das Aluminiumprofil stanzt. Der Lochstempel 13 wird von einer Klemmschraube 12 gehalten und gesichert. Der Lochstempel 13 kann herausgenommen und ausgewechselt werden. Der Lochstempel 13 ist parallel zur Längsachse des Stanzmessers 10 ausgerichtet.

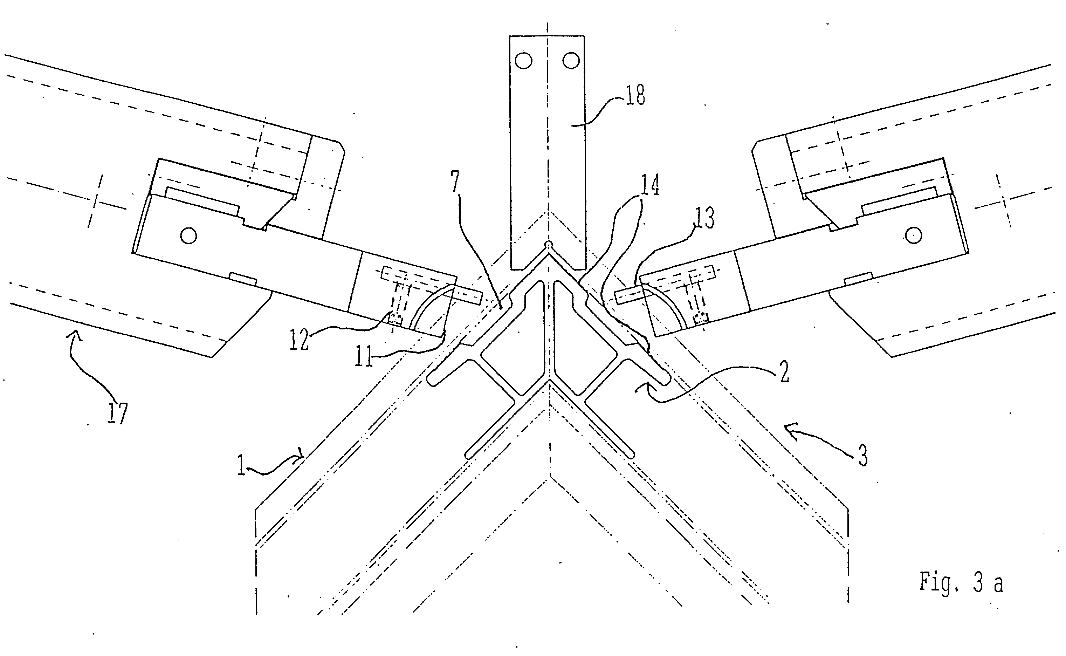

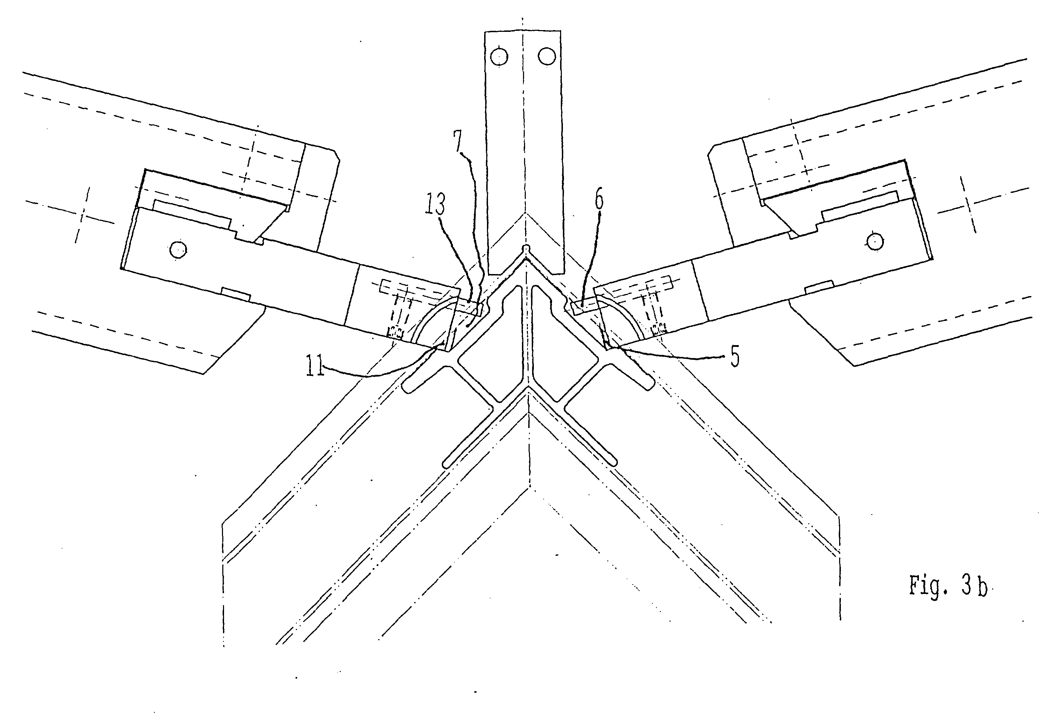

In den Figuren 3a und 3b sind die Aluminiumprofile 1 und 3 dargestellt, die gemäß ihrer Gehrung mit dem Eckwinkel 2 zusammengesetzt sind und in einer Halterung 18 ausgerichtet sind. Die Stanzmesser 10 werden in ihren Ausnehmungen 15 von den Zylindern 17 der Eckverbindungsmaschine aufgenommen. In Figur 3a sind die Zylinder 17 in der Null-Position und die Aluminiumprofile sind unverpreßt. Das Stanzmesser 10 ist unter einem Winkel von ungefähr 60 Grad zum Aluminiumprofil 1 ausgerichtet. Die Seitenwand der Profilnut 7, in die die scharfkantige Spitze 11 eingreift, weist einen daran angepaßten Winkel der gleichen Größenordnung auf. Die andere Seite der Profilnut, in deren Nähe der Lochstempel 13 eingreift, ist abgerundet ausgebildet und erleichtert dadurch die Verteilung des Klebers auf die Flächen 14.

In Figur 3b ist zu erkennen, wie die scharfkantige Spitze des Stanzmessers 10 eine Verpreßfahne 5 aus den Aluminiumprofilen 1 und 3 herausgedrückt hat und entlang der Seitenwand der Profilnut 7 in den Bereich des Eckwinkels 2 eingedrungen ist. Gleichzeitig hat der Lochstempel 13 die Wand des Aluminiumprofils 1 durchdrungen und ist ebenfalls in die Profilnut 7 eingedrungen. Die Verpreßfahne 5 rastet in die Profilnut 7 ein und sorgt für eine dauerhafte Verbindung der Aluminiumprofile 1 und 3 mit dem Eckwinkel 2.

Durch die Klebereinspritzung durch die Löcher 6 wird die Verbindung weiter verfestigt. In der Figur 3b sind die Zylinder in ihrer Endposition dargestellt, in der das Profil verpreßt ist.

Die Länge des Lochstempels 13 ist unter Berücksichtigung des Arbeitswinkels vom Stanzmesser 10 zum Aluminiumprofil 1 so ausgebildet, daß der Lochstempel 13 etwas früher als die scharfkantige Spitze 11 das Aluminiumprofil in Eingriff nimmt. In anderen Ausführungsformen kann dies abhängig vom zu bearbeitenden Material auch exakt gleichzeitig oder in umgekehrter Reihenfolge erfolgen.

## Patentansprüche

1. Verfahren zur Herstellung einer Verbindung zwischen einem Werkstück mit mindestens einer Profilkammer (1, 3) und einem Verbindungsstück (2, 4), bei dem das Verbindungsstück (2, 4) in die Profilkammer des Werkstücks (1, 3) eingeschoben und anschließend das Werkstück (1, 3) gelocht wird, um eine Klebereinbringung in den Verbindungsbereich von Werkstück (1, 3) und Verbindungsstück (2, 4) zu ermöglichen, und das Werkstück (1, 3) in derselben Position mit dem Verbindungsstück (2, 4) verpreßt wird,
dadurch **gekennzeichnet**,
- daß das Lochen des Werkstücks (1, 3) durch Stanzen erfolgt,
- daß das Stanzen mittels eines Lochstempels (13) durchgeführt wird, welcher in das Werkstück (13) verfahren wird, und
- daß in derselben Verfahrbewegung mit dem Stanzen das Verpressen des Werkstücks (1, 3) mit dem Verbindungsstück (2, 4) durchgeführt wird.

2. Verfahren nach Anspruch 1,
dadurch **gekennzeichnet**,
daß im gleichen Verfahrensschritt Kleber durch die durch das Stanzen hergestellten Löcher (6) eingebracht wird.

3. Verfahren nach einem der Ansprüche 1 oder 2,
dadurch **gekennzeichnet**,
daß in einem einzigen Verfahrensschritt zwei Werkstükke (1, 3) aus Aluminiumprofil mit einem Eckwinkel als Verbindungsstück (2, 4) zu einer Eckverbindung verbunden werden.

4. Stanzmesser (10) zur Herstellung einer Verbindung zwischen einem Werkstück mit mindestens einer Profilkammer (1, 3) und einem Verbindungsstück (2, 4), insbesondere zur Durchführung des Verfahrens nach einem der vorhergehenden Ansprüche,
wobei das Stanzmesser (10) eine zum Verpressen des Werkstücks mit dem Verbindungsstück ausgebildete, scharfkantige Spitze (11) aufweist,
dadurch **gekennzeichnet**,
daß am Stanzmesser (10) weiterhin ein Lochstempel (13) vorgesehen ist, und daß die zum Verpressen des Werkstücks (1, 3) mit dem Verbindungsstück (2, 4) ausgebildete scharfkantige Spitze (11) und der Lochstempel (13) zum Lochen des Werkstücks (1, 3) am gleichen Ende des Stanzmessers (10) angeordnet sind.

5. Stanzmesser nach Anspruch 4,
dadurch **gekennzeichnet**,
daß der Lochstempel (13) neben der scharfkantigen Spitze (11) angeordnet ist.

6. Stanzmesser nach einem der Ansprüche 4 oder 5,
dadurch **gekennzeichnet**,
daß der Lochstempel (13) herausnehmbar angeordnet ist.

7. Stanzmesser nach Anspruch 6,
dadurch **gekennzeichnet**,
daß der Lochstempel (13) durch eine Klemmschraube (12) festgehalten wird.

8. Stanzmesser nach Anspruch 4,
dadurch **gekennzeichnet**,
daß der Lochstempel (13) hohl ausgebildet ist und an eine Einrichtung zur Kleberzuführung angeschlossen ist.

## Claims

1. Method for producing a joint between a workpiece having at least one profile chamber (1, 3) and a connecting piece (2, 4), in which the connecting piece (2, 4) is inserted in the profile chamber of the workpiece (1, 3) and subsequently said workpiece (1, 3) is perforated, in order to permit the introduction of an adhesive into the joining area between workpiece (1, 3) and connecting piece (2, 4), and the workpiece (1, 3) is pressed with the connecting piece (2, 4) in the same position, characterized in that the perforation of the workpiece (1, 3) takes place by punching, that punching is performed by means of a piercing punch (13), which is moved into the workpiece (1, 3) and that in the same movement as the punching the workpiece (1, 3) is pressed with the connecting piece (2, 4).

2. Method according to claim 1, characterized in that in the same method step adhesive is introduced through the holes (6) produced by punching.

3. Method according to one of the claims 1 or 2, characterized in that in a single method step two workpieces (1, 3) made from aluminium section with an angle bracket as the connecting piece (2, 4) are joined to form an angle connection.

4. Punching tool (10) for producing a joint between a workpiece having at least one profile chamber (1, 3) and a connecting piece (2, 4), particularly for performing the method according to one of the preceding claims, in which the punching tool (10) has a sharp-edged tip (11) constructed for pressing the workpiece with the connecting piece, characterized in that on the punching tool (10) is also provided a piercing punch (13) and that the sharp-edged tip (11) constructed for pressing the workpiece (1, 3) with the connecting piece (2, 4) and the piercing punch (13) for perforating the workpiece (1, 3) are located at the same end of the punching tool (10).

5. Punching tool according to claim 4, characterized in that the piercing punch (3) is placed alongside the sharp-edged tip (11).

6. Punching tool according to one of the claims 4 or 5, characterized in that the piercing punch (13) is removable.

7. Punching tool according to claim 6, characterized in that the piercing punch (13) is secured by a clamping bolt (12).

8. Punching tool according to claim 4, characterized in that the piercing punch (13) is hollow and is connected to an adhesive supply device.

## Revendications

1. Procédé de fabrication d'une jonction entre une pièce d'oeuvre avec au moins une chambre profilée (1, 3) et une pièce de jonction (2, 4), dans lequel la pièce de jonction (2, 4) est enfoncée dans la chambre profilée de la pièce d'oeuvre (1, 3) et la pièce d'oeuvre (1, 3) est ensuite perforée, afin de permettre un apport de colle dans la zone de jonction entre pièce d'oeuvre (1, 3) et pièce de jonction (2, 4), et la pièce d'oeuvre (1, 3) est pressée dans la même position avec la pièce de jonction (2, 4), ***caractérisé en ce que***
la perforation de la pièce d'oeuvre (1, 3) s'effectue par poinçonnage,
le poinçonnage est effectué au moyen d'un perforateur (13) qui est enfoncé dans la pièce d'oeuvre (13), et
le pressage de la pièce d'oeuvre (1, 3) avec la pièce de jonction (2, 4) s'effectue dans le même mouvement de déplacement que le poinçonnement.

2. Procédé selon la Revendication 1, ***caractérisé en ce que,*** dans la même étape de procédé, de la colle est introduite à travers les trous (6) réalisés par le poinçonnement.

3. Procédé selon la Revendication 1 ou 2, ***caractérisé en ce que,*** en une seule étape de procédé, deux pièces d'oeuvre (1, 3) en profilé d'aluminium sont jointes à une cornière d'angle servant de pièce de jonction (2, 4) pour former une jonction d'angle.

4. Poinçon de perforation (10) pour fabriquer une jonction entre une pièce d'oeuvre avec au moins une chambre profilée (1, 3) et une pièce de jonction (2, 4), en particulier pour effectuer le procédé selon l'une des revendications précédentes,
le poinçon de perforation (10) présentant une pointe acérée (11) conformée pour presser la pièce d'oeuvre avec la pièce de jonction,
***caractérisé en ce que,*** sur le poinçon de perforation (10) est prévu de plus un perforateur (13), et ***en ce que*** la pointe acérée (11) conformée pour presser la pièce d'oeuvre (1, 3) avec la pièce de jonction (2, 4) et le perforateur (13) pour perforer la pièce d'oeuvre (1, 3) sont placés sur la même extrémité du poinçon de perforation (10).

5. Poinçon de perforation selon la Revendication 4, ***caractérisé en ce que*** le perforateur (13) est placé à côté de la pointe acérée (11).

6. Poinçon de perforation selon la Revendication 4 ou 5, ***caractérisé en ce que*** le perforateur (13) est monté amovible.

7. Poinçon de perforation selon la Revendication 6, ***caractérisé en ce que*** le perforateur (13) est fixé par un sabot de maintien (12).

8. Poinçon de perforation selon la revendication 4, ***caractérisé en ce que*** le perforateur (13) est conformé creux et est raccordé à un dispositif d'alimentation en colle.
